# EUROPEAN PATENT SPECIFICATION

(11) **EP 3 135 052 B1**
(45) Date of publication and mention of the grant of the patent: **31.05.2023**
(21) Application number: 15809012.6
(22) Date of filing: 23.01.2015
(51) Int. Cl.: H04L 9/40, H04W 12/033, H04W 36/00, H04W 12/04, H04W 12/08, H04W 84/04

(54) **METHOD FOR COMMUNICATION BETWEEN FEMTO ACCESS POINTS AND FEMTO ACCESS POINT**
VERFAHREN ZUR KOMMUNIKATION ZWISCHEN FEMTO-ZUGANGSPUNKTEN SOWIE FEMTO-ZUGANGSPUNKT
PROCÉDÉ POUR UNE COMMUNICATION ENTRE DES FEMTO-POINTS D'ACCÈS ET FEMTO-POINT D'ACCÈS

(30) Priority: 19.06.2014 IN 2996CH2014
(43) Date of publication of application: 01.03.2017
(73) Proprietor: Huawei Technologies Co., Ltd., Shenzhen, Guangdong 518129 (CN)
(72) Inventor: POTHULA, Dharmanandana Reddy, Shenzhen, Guangdong 518129 (CN); ZHANG, Chi, Shenzhen, Guangdong 518129 (CN)
(74) Representative: Epping - Hermann - Fischer
(86) International application number: PCT/CN2015/071464
(87) International publication number: WO 2015/192657

(56) References cited:
- EP-A1- 2 384 039
- WO-A1-2013/121246
- CN-A- 102 790 775
- JP-A- 2001 111 543
- US-A1- 2005 036 623
- US-A1- 2009 156 213
- US-A1- 2009 304 003
- US-A1- 2012 026 865
- US-A1- 2012 266 209
- US-B1- 7 366 894

## Description

### TECHNICAL FIELD

The present invention relates to the field of communication technology, and more particularly to a method for communication between femto access points and to a femto access point.

### BACKGROUND

In long term evolution (Long Term Evolution, LTE) case, Femto to Femto Handover is used to hand over a UE from a source H(e)NodeB (Home E-UTRAN NodeB, H(e)NodeB) to a target H(e)NodeB using X2. In universal mobile telecommunication system (Universal Mobile Telecommunications System, UMTS) case, Femto to Femto Handover is used to hand over user equipment (User Equipment, UE) from a source H NodeB to a target H NodeB using Iurh. Control message exchanges and data have to go through the public internet. The presence of public IP connectivity between the security gateway (Security Gateway, S-GW) and the source H(e)NodeB, between the S-GW and the target H(e)NodeB, as well as between the source H(e)NodeB and the target H(e)NodeB is assumed, which is not safe.

In these cases, the user traffic needs to traverse an untrusted network, which should be protected. In such situations, 3GPP (the 3rd Generation Partnership Project, 3GPP) specify IPSec Encapsulated Security Payload (Encapsulated Security Payload, ESP) in tunnel mode should be used. The technical solution is to use on-demand point-to-point IPSec tunnels for protection of Iurh/X2 signaling and data traffic. For the X2 interface case, ∼64^2 IPSec tunnels needed to create mesh topology, and for the Iurh interface case, ∼32^2 IPSec tunnels needed to create mesh topology. It establish IPSec tunnel on handover only, teardown the tunnel once handover is done, so this repeats for every handover. To establish on-demand point-to-point IPSec tunnel, the IPSec key negotiation is necessary. In the process of IPSec key negotiation, DH algorithm is used to calculate DH key, which consumes a large amount of computing resources and bandwidth, and makes 50 to 100ms delays, which impacts QoS (Quality of Service, Qos) of signaling. It imposes a substantial drain on system processing and usually needs hardware acceleration to reduce DH key calculation process overhead for full Mesh. Therefore, the efficiency of handover method of existing technology is low, and adds further overhead to the user data.

EP2384039 A1 named "Communication system, femto cell base station, authentication device, communication method, and recording medium" has proposed a communication system for solving a problem, in which secure communications security cannot be ensured in communications between a femtocell base station and UE, is provided. The communication system includes UE (User Equipment) and an HLR (Home Location Register) used in an IMS (IP Multimedia subsystem) network and a fomtocell base station (Femto AP) that constructs a predetermined communication area. The femtocell base station exists between the UE and the HLR, acquires a concealment key corresponding to the UE from the HLR during authentication of the any executes a concealment process to conceal the identity of the UE based on the concealment key.

US 2012/026865A1 named "Femtocell service through a secondary connection" has proposed system(s), apparatus(es), and method(s) are provided to for providing femtocell service through a secondary connection to a network gateway node that is part of a service provider network. The secondary connection can be established in response to at least one telecommunication performance condition of a primary connection to the network gateway node; the at least one performance condition includes connectivity state of the primary connection or quality of traffic delivery through the primary connection. The secondary connection can be established, in part, via a home gateway node that is alternative to a home gateway node associated with a femtocell access point (AP) that enables, in part, the femtocell wireless service. The main home gateway node or the femtocell AP can initiate establishment of the secondary connection. Home gateway node(s) or femtocell AP(s) that can provide femtocell service through the secondary connection can manage connectivity with the network gateway node.

US 2009/304003A1 named "Global Virtual VPN" has proposed a method, apparatus and article of manufacture for building next generation improved global virtual private networks over the Internet. The method comprises of building two layers on top of the public infrastructure (001): a network abstraction layer (NAL) (002) and a network virtualization layer (NVL) (003): the NVL (003) is built on top of the NAL (002). The NVL (003) consists in Group Domain of Interpretation (GDOI) domain deployments on virtualized hardware aggregators over a NAL (002). The latter consists in point-to-multipoint Generic Routing Encapsulation (GRE) networks over the Internet (001). Both the NVL (003) and NAL (002) can be deployed using advanced unattended provisioning methodology.

US 7 366894B1 named "Method and apparatus for dynamically securing voice and other delay-sensitive network traffic" has proposed a request is received for secure network traffic from a device having a private network address at a source node. The private network address of a requested destination device is obtained at a destination node from a route server based on signaling information associated with the request. The public network address of the destination node associated with the private network address is obtained. In response to the request, a virtual circuit is created between the source node and the destination node based on the public network address of the destination node. Network traffic is encrypted for transport at least from the source node to the destination node through the virtual circuit. Creating the virtual circuit dynamically in response to the request functions like a fully meshed network but requires less provisioning and maintenance. The process is readily scalable, as with a hub and spoke network but with less delay.

US 2009/156213 A1 named "Interworking Gateway for Mobile Nodes" has proposed systems and methods that allow inter working between communication networks for the delivery of service to mobile nodes.US 2012/266209 A1 named "Method of Secure Electric Power Grid Operations Using Common Cyber Security Services" has proposed a system of operating an electric power grid using common cyber security services to ensure secure connections from control systems to devices in the electric transmission, electric distribution, and energy centric devices in electric customers' networks.

### SUMMARY

Embodiments of the present invention are directed to a method for communication between femto APs and to a femto AP so as to solve the deficiencies in prior art that resource consuming and handover delay in the case of negotiation between two femto APs and generation of the key, such that to improve handover efficiency.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

The present invention will be described in more detail with reference to the drawings and embodiments.

### BRIEF DESCRIPTION OF THE ACCOMPANYING DRAWINGS

FIG. 1 is a flow diagram of a method for communication between femto APs according to an embodiment of the present invention;
FIG. 2 shows how GDOI works between a femto AP and a key server according to an embodiment of the present invention;
FIG. 3 is a flow diagram of a method for communication between femto APs according to another embodiment of the present invention;
FIG. 4 shows how NHRP works between a femto AP and a femto-GW/S-GW (NHRP server) according to an embodiment of the present invention;
FIG. 5 is shows how the whole solution involving GDOI exchange and NHRP register and update works between femto APs and a femto-GW (Key Server) according to an embodiment of the resent invention;
FIG. 6 is a schematic diagram of a femto AP according to an embodiment of the present invention;
FIG. 7 is a schematic diagram of a femto AP according to another embodiment of the present invention;
FIG. 8 is a flow diagram of a method for communication between femto APs according to an embodiment of the present invention;
FIG. 9 is a flow diagram of a method for communication between femto APs according to another embodiment of the present invention;
FIG. 10 is a flow diagram of a method for communication between femto APs according to an embodiment of the present invention;
FIG. 11 is a flow diagram of a method for communication between femto APs according to another embodiment of the present invention;
FIG. 12 is a schematic block diagram of a first femto AP according to an embodiment of the present invention;
FIG. 13 is a schematic block diagram of a second femto AP according to an embodiment of the present invention;
FIG. 14 is a schematic block diagram of a Key Server according to an embodiment of the present invention.

### DESCRIPTION OF EMBODIMENTS

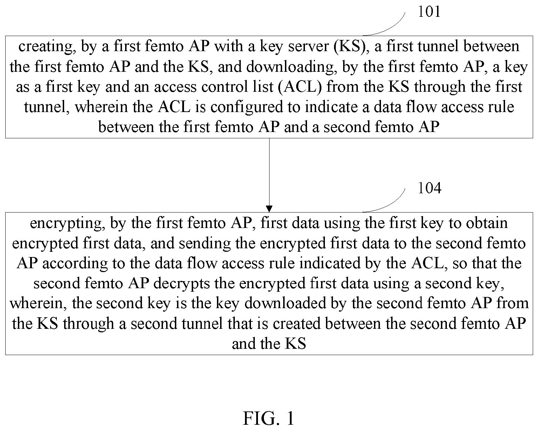

In order to make the objects, technical solutions and merits of the present invention clearer, detailed description of embodiments of the present invention is given by reference to accompanying drawings. Apparently, the embodiments described are only part of the embodiments of the present invention, but not all of them. Other embodiments acquired by those skilled in the art without creative work all fall into the protection scope of the present invention. FIG. 1 is a flow diagram of a method for communication between femto APs (Access Points, APs) according to an embodiment of the present invention. As shown in FIG. 1, the communication method between femto APs provided by the present embodiment can be specifically applied to the communication process between two femto APs in a communication system, in particular, to the communication process between a source femto AP and a target femto AP during the handover procedure of a UE from the source femto AP to the target femto AP when the source femto AP needs to send data of the UE to the target femto AP in order to keep the communication consistency between UE and network side. The communication system can be, but is not limited to, an LTE system or a UMTS system.

The communication method between femto APs according to an embodiment includes:
Step 101, creating, by a first femto AP with a key server (KS), a first tunnel between the first femto AP and the KS, and downloading, by the first femto AP, a key as a first key and an access control list (ACL) from the KS through the first tunnel, wherein the ACL is configured to indicate a data flow access rule between the first femto AP and a second femto AP. The data flow access rule includes IP address, port information and protocol number, etc.
Step 104, encrypting, by the first femto AP, first data using the first key to obtain encrypted first data, and sending the encrypted first data to the second femto AP according to the data flow access rule indicated by the ACL, so that the second femto AP decrypts the encrypted first data using a second key, wherein, the second key is the key downloaded by the second femto AP from the KS through a second tunnel that is created between the second femto AP and the KS.

Specifically, the KS can be integrated in a security gateway (Security Gateway, S-GW) and also can be individually arranged, when individually arranged, the KS can communicate with the S-GW. There are a plurality of femto APs existing in a network, the communication process between each femto AP and the KS, and between a femto AP and another femto AP can both be implemented by adopting the method provided by the present embodiment. Considering a single femto AP as an example, the femto AP creates a tunnel between the femto AP and the KS, specifically the tunnel can be an IPSec tunnel, and the tunnel can permanently exist after being created. During the creation of the tunnel, key agreement is performed between the femto AP and the KS, and a key is confirmed for protection of the interactive process between the femto AP and the KS. After creating the tunnel, the femto AP downloads the key and the ACL from the KS. The key is generated by the KS according to a predetermined rule, and the ACL is generated by the S-GW. Specifically, the key generated here can be a traffic encryption key (Traffic Encryption Key, TEK) used to encrypt the data traffic and a key encryption key (Key Encryption Key, KEK) is generated and used to secure the TEK. The S-GW can acquire the IP address of each femto AP in the network and the variation of IP address, and the S-GW generates an ACL for each pair of femto APs according to their IP address. The ACL is specifically configured to indicate the data flow access rule between each pair of femto APs, the data flow access rule includes IP address, port and protocol number, etc.. The S-GW sends the created ACLs to the KS, and then the KS sends the ACLs to the femto AP through the corresponding tunnel. The femto AP can simultaneously download the key and the ACL from the KS, and can also download the key and the ACL separately at two different time points.

For ease of description, the present embodiment illustrates the communication process between two femto APs in the network. The two femto APs are a first femto AP and a second femto AP, "first" and "second" here are only used to distinguish the two femto APs, but are not for order limitation.

The first femto AP can be the above described source femto AP in handover, and the second femto AP can be the target femto AP. Both of the first femto AP and the second femto AP can create a tunnel with the KS, the tunnel between the first femto AP and the KS is the first tunnel, the tunnel between the second femto AP and the KS is the second tunnel. The first femto AP downloads a first key and the ACL from the KS through the first tunnel, the second femto AP downloads a second key from the KS through the second tunnel, the first key and the second key are identical, therefore, the first key can be downloaded by the second femto AP and used as the second key. During a procedure that the UE switches from the first femto AP to the second femto AP, the first femto AP encrypts the data using the first key, and sends the encrypted data to the second femto AP according to the ACL, the second femto AP decrypts the encrypted data received from the first femto AP according to the second key, such that the communication between the first and second femto AP is achieved and the security of the communication process is guaranteed.

The communication method between femto APs according to an embodiment generates keys for the femto APs through setting the KS such that the femto APs can communicate with other femto APs using the keys, which avoids resource consuming and handover delay in the case of negotiation between two femto APs and generation of the key.

According to an embodiment, in step 101, creating, by the first femto AP, the first tunnel between the first femto AP and the key server (KS) includes:
creating, by the first femto AP, the first tunnel between the first femto AP and the KS through internet key exchange (IKE) negotiation.

Specifically, the first femto AP creating the first tunnel between the first femto AP and the KS through IKE negotiation can be: the first femto AP negotiates with the KS using IKE, and acquires a DH key through DH algorithm during the negotiation process. The DH key can be Kas and Kbs which are pre-established as paired keys to secure the traffic between a server and each principal. Further communication between the first femto AP and the KS can also use the DH key for encryption. The KS can authenticate the identity of the first femto AP before a key negotiation process, if the authentication is successful, the key negotiation process continues.

In an embodiment, the first femto AP and the second femto AP belong to a same GDOI (Group Domain of Interpretation, GDOI) group.

Accordingly, in step 101, downloading, by the first femto AP, the key as the first key and the ACL through the first tunnel includes:
downloading, by the first femto AP, the key as the first key and the ACL from the KS through the first tunnel using a GDOI protocol.

Specifically, multiple GDOI groups can be pre-divided, and each GDOI group includes a number of femto APs. The GDOI group can be divided according to area, which will divide femto APs that may communicate with each other into a same GDOI group. Each GDOI group defined on the KS has an identity that is shared among the femto APs (Group Members in this case) within the GDOI group. When the femto APs in the network are divided into multiple GDOI groups, the first femto AP and the second femto AP belong to a same GDOI group. The first femto AP downloads the key, the ACL and other parameters and configuration information from the KS through the first tunnel using GDOI protocol, the second femto AP also downloads the same key and other parameters and configuration information from the KS through the second tunnel using the GDOI protocol. The keys provided by the KS for femto APs from the same GDOI group are the same.

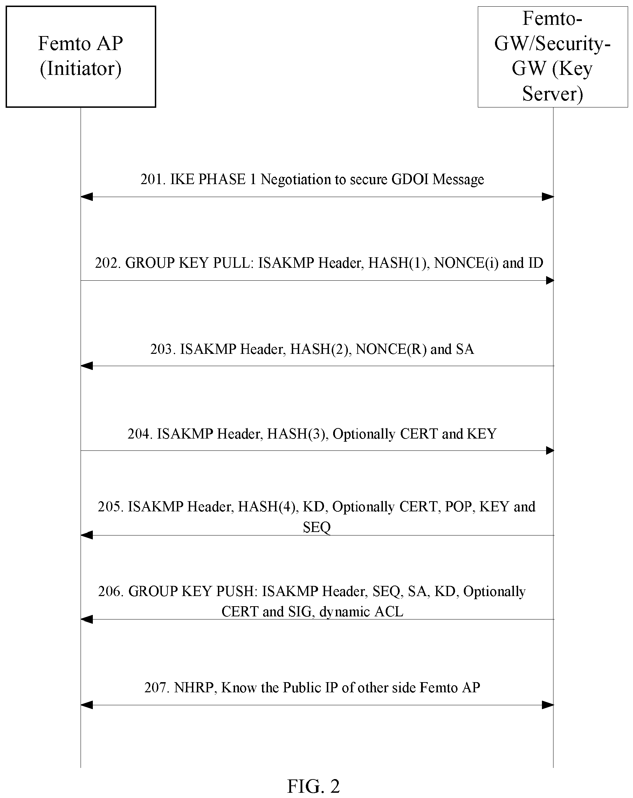

FIG. 2 shows how GDOI works between Femto AP and Key Server according to an embodiment of the present invention. For details of the above embodiment, the GDOI exchange will be introduced as follows:
Step 201, negotiation to secure GDOI message is performed between the femto AP (Initiator) and the femto-GW/Security-GW (Key Server) in IKE PHASE 1.

GDOI is a group key management protocol used to provide a set of IPSec keys to a group of Femto AP (Group Member) that wish to communicate with each other. GDOI is a 'Phase 2' protocol which is protected by "Phase 1 Security Association (SA)". Phase 1 here means that a tunnel between the femto AP and the KS is already created, Phase 2 means the phase after Phase 1, in which the GDOI exchange is performed. IKE Phase 1 remains the same as in traditional IPSec. All femto AP's authenticate themselves using IKE to the Key Server which is statically configured for all femto APs. All IKE authentication methods are supported Pre-Shared Keys (PSK) or RSA-Signature (PKI) or RSA-Encryption.

Step 202, GROUP KEY PULL from the femto AP to the KS: ISAKMP Header, HASH (1), NONCE (i) and ID.

In practical application, the GDOI exchange is also called registration. The femto AP (Initiator) initiates and contacts the Key Server. The femto AP is configured with the group identifier and acceptable Phase 1 policy. Once Phase 1 is complete, the initiator moves to GDOI protocol. The initiator builds a NONCE payload by choosing the Ni (Nonce value by initiator), builds an ID payload using the group identifier, and generates HASH (1). The first GDOI message is also called request message.

Step 203, the KS returns ISAKMP Header, HASH (2), NONCE (R) and SA to the femto AP.

Upon receipt of the GDOI message, the Key Server (Responder) processes the NONCE and ID payloads. It verifies that its database contains the group information for the group ID. It constructs the second GDOI message, chooses the Nr (Nonce value by responder) for NONCE payload, the policy for the group in the ID payload, followed by SA TEK payload for traffic SAs and SA KEK payload, and generates HASH (2). The second GDOI message is also called Push message.

Step 204, the femto AP sends ISAKMP Header, HASH (3), Optionally CERT and KEY to the KS. The femto AP receives the second GDOI message, validates the HASH (2) and process NONCE and SA payloads. If the group policy uses certificates for authorization, the femto AP generates a hash with Ni and Nr, and signs it. This becomes the POP payload. The CERT payload holds the Public Key. The femto AP creates the third GDOI message using POP and CERT payloads, and generates HASH (3). The third GDOI messages is also called ACK message.

Step 205, the KS returns ISAKMP Header, HASH (4), KD, Optionally CERT POP, KEY and SEQ to the femto AP.

Upon receipt of the third GDOI message, the KS validates the hash. It constructs a fourth GDOI message including the SEQ payload containing the sequence number, the KD payload containing keys corresponding to policy previously sent in SA TEK and KEK, and POP and CERT payloads (if needed), and generates HASH (4). The fourth message is also called Key Download message. The femto AP receives the fourth GDOI message and validates the hash. It then processes the SA TEK and KEK payloads.

Step 206, GROUP KEY PUSH from the KS to the femto AP: ISAKMP Header, SEQ, SA, KD, Optionally CERT and SIG, dynamic ACL.

Step 207, NHRP, know the public IP of other side femto AP.

Details of NHRP process will be illustrated hereinafter in another embodiment.

The internet security association and key management protocol (Internet Security Association and Key Management Protocol, ISAKMP) Header is protected by IKE Phase 1 while everything after the header is encrypted. KE payload is used if Perfect Forward Secrecy (Perfect Forward Secrecy, PFS) is set.

In an embodiment, GDOI introduces two different types of encryption keys, and the KEK is used to secure Traffic encryption key, and the TEK which encrypts the data traffic. Through using a KS to distribute IPSec key for femto APs (Group Members), the operational cost of managing huge number of IPSec tunnels is decreased, the number of IPSec tunnels ceases to be a limiting factor in the deployment of the femto AP. Further, since only one tunnel is created between one femto AP and the KS, the complexity of IPSec tunnels is decreased. Therefore, the consumption of the system processing resources is less.

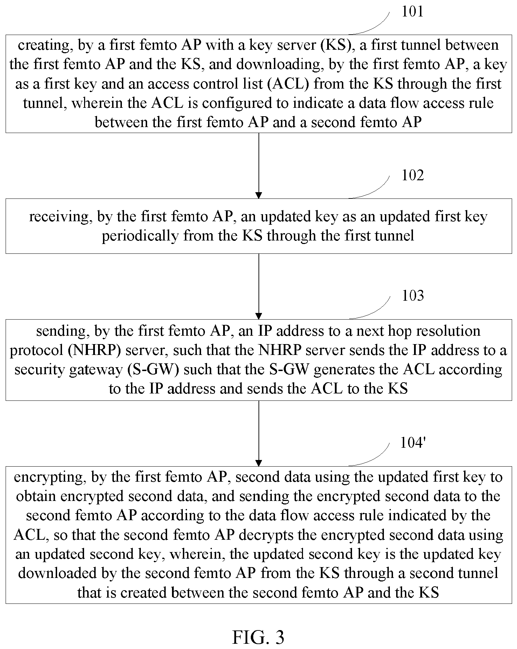

FIG. 3 is a flow diagram of a method for communication between femto APs according to another embodiment of the present invention. As shown in FIG. 3, in step 104 of the present embodiment, before the downloading, the first femto AP, the key as the first key and the ACL from the KS through the first tunnel, the method further includes:
step 103, sending, by the first femto AP, an IP address to a next hop resolution protocol (NHRP) server, such that the NHRP server sends the IP address to a security gateway (S-GW) such that the S-GW generates the ACL according to the IP address and sends the ACL to the KS.

Specifically, a NHRP server can be set in a network, and the NHRP server can be integrated in the S-GW and also can be individually arranged. When the NHRP server is individually arranged, the NHRP server can communicate with the S-GW. All femto APs in the network report their own IP address to the NHRP server, and when the IP address of a femto AP changes, the femto AP will report the IP address after change to the NHRP server. The NHRP server sends the IP address of the femto APs to the S-GW, and the S-GW generates dynamic ACLs and sends the ACLs to the KS. The S-GW re-generates ACL when the IP address of the femto AP changes.

In step 101 of the present embodiment, after the creating, by a first femto AP, a first tunnel between the first femto AP and a key server (KS), and downloading a key as a first key and an access control list (ACL) from the KS through the first tunnel, the method further includes:
step 102, receiving, by the first femto AP, an updated key as an updated first key periodically from the KS through the first tunnel;
step 104', encrypting, by the first femto AP, second data using the updated first key to obtain encrypted second data, and sending the encrypted second data to the second femto AP according to the data flow access rule indicated by the ACL, so that the second femto AP decrypts the encrypted second data using an updated second key, wherein, the updated second key is the updated key downloaded by the second femto AP from the KS through a second tunnel that is created between the second femto AP and the KS.

Specifically, the KS can update the key of each GDOI group periodically, and sends the updated key to the members (APs) of a corresponding GDOI group. When a member leaves or when the key lifetime expires, the KS will push down the key materials to all group members (APs). Therefore, keys are periodically refreshed on all femto APs using a process called rekey. Keys for groups' rekey and data security SA are downloaded. The Re-key SA includes KEK common to the group, and the Data-security SA includes TEK used to encrypt/decrypt data traffic. The group key push message replaces a Re-key SA and/or Data-security SA, and it can be pushed using unicast or multicast. It can be only a single message generated by the KS. It includes new keys when the key-lifetime expires, dynamic access-list policy is about to identify the interesting traffic. This ACL policy will be downloaded to all femto AP's for this S-GW, which incorporates the Key Server.

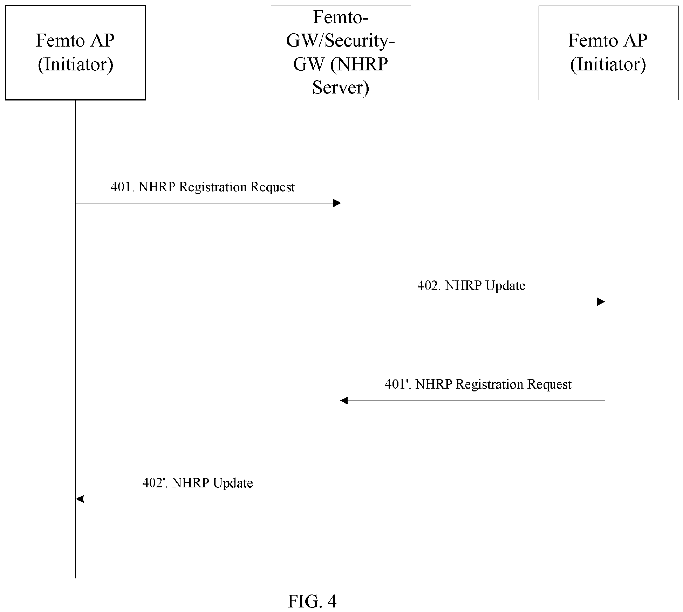

FIG. 4 shows how NHRP works between a femto AP and a femto-GW/S-GW (NHRP server) according to an embodiment of the present invention. For details of the above embodiment, the NHRP mechanism will be introduced as follows:
Step 401/401', a first femto AP (Initiator) initiates a NHRP registration request to the femto-GW/Security-GW (NHRP Server).
Step 402/402', the NHRP Server updates the physical address to another femto AP.

NHRP allows a source station (femto AP), wishing to communicate over an NBMA (Non-Broadcast Multiple Access, NBMA) sub-network, to determine the internetworking layer addresses and NBMA addresses of suitable NBMA next hops toward a destination station. NHRP facilitate dynamic tunnel establishment. NHRP clients (femto APs) issue registration requests to the next hop server (femto GW/S-GW) to update the physical address to another spoke router.

In practical applications, the physical address of a femto AP may change, when the change occurs, the femto AP will report a registration to the NHRP server, then the NHRP server updates the IP address of the femto AP and sends the update to the S-GW, if arranged individually. Upon receiving the update of the femto AP's IP address, the S-GW will generates a new ACL and distribute the new ACL to other femto APs which are in communication with the present femto AP.

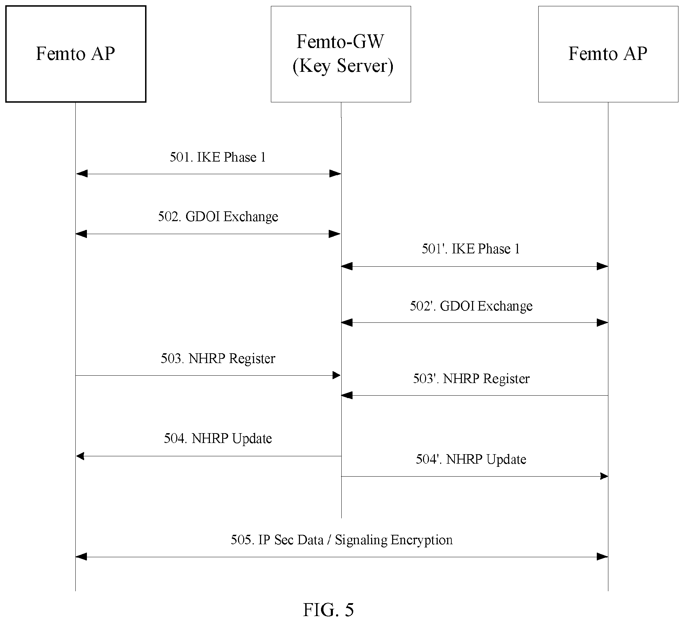

FIG. 5 is shows how the whole solution involving GDOI exchange and NHRP register and update works between femto APs and a femto-GW (Key Server) according to an embodiment of the present invention.

Step 501/501', IKE Phase 1 is executed between the femto AP and the femto GW (Key Server).

Step 502/502', GDOI Exchange is executed between the femto AP and the femto GW.

Step 503/503', the femto AP initiates a NHRP register request to the femto GW.

Step 504/504', the femto GW returns NHRP update to the femto AP.

Step 505, IPSec data / Signaling encryption is performed between two femto APs.

In above processes, a femto AP obtains IP address using DHCP from ISP. A GDOI group is created on femto-GW/security-GW (Key Server). Each group defined on the KS has an identity that is shared among the femto AP's (Group Members) within the group. The femto AP establishes IKE phase 1 tunnel to the security GW/femto GW, downloads security parameters using GDOI and downloads Femto AP configuration from Femto Management after its authentication.

A dynamic ACL is derived in Femto-GW/Security-GW based on DHCP IP address assignment to Femto AP's from DHCP Server. At femto GW/security GW, sniff DHCP acknowledgment messages, extract IP address range and form dynamic ACL's in serving gateway. Store dynamic ACL's with other security parameters under GDOI group in femto-GW/security-GW (Key Server), when Crypto is applied to femto AP, it immediately sends a register message to the femto-GW/security-GW (Key Server), downloads security parameters (group SA) to femto AP using GDOI protocol. All femto AP's follow the same process.

Each femto AP has a permanent GDOI IPSec tunnel to the femto gateway, not to other femto AP's within the network. Each femto AP registers as client to the NHRP server (femto GW). Each femto AP registers its real IP address via NHRP protocol when it boots or real IP address changes. NHRP Server notifies/updates real addresses of the femto AP's to other femto AP's through IPSec tunnel in order to build direct IPSec tunnels. Femto AP registers and learns next femto AP's real IP address using NHRP (RFC 2332) protocol.

At the femto AP side, the same GDOI IPSec tunnel will be used to protect all its X2 / Iurh that meets the specification of the ACLs. It provides efficient fully meshed IPSec VPN connectivity. Here, the data encryption is "on-demand" and is only applied to traffic that meets the specification of the ACLs.

The key server will be responsible for sending rekey messages. Here, rekey messages are sent through unicast transport mechanism periodically. The encryption/decryption of data/signaling traffic is performed using group SA.

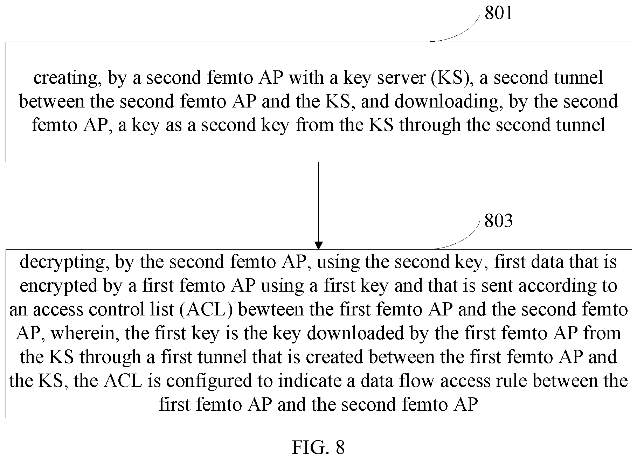

An embodiment of the present invention provides a method for communication between femto APs, as shown in FIG. 8, the method including:
step 801, creating, by a second femto AP with a key server (KS), a second tunnel between the second femto AP and the KS, and downloading, by the second femto AP, a key as a second key from the KS through the second tunnel.
step 803, decrypting, by the second femto AP, using the second key, first data that is encrypted by a first femto AP using a first key and that is sent according to an access control list (ACL) between the first femto AP and the second femto AP, wherein, the first key is the key downloaded by the first femto AP from the KS through a first tunnel that is created between the first femto AP and the KS, the ACL is configured to indicate a data flow access rule between the first femto AP and the second femto AP.

Wherein, the creating, by the second femto AP with the KS, the second tunnel between the second femto AP and the KS includes:
creating, by the second femto AP with the KS, the second tunnel between the second femto AP and the KS through internet key exchange (IKE) negotiation.

Wherein, the second femto AP and the first femto AP belong to a same group domain of interpretation (GDOI) group.

Wherein, the downloading, by the second femto AP, the key as the second key from a key server (KS) through the second tunnel includes:
downloading, by the second femto AP, the key as the second key from the KS through the second tunnel using a GDOI protocol.

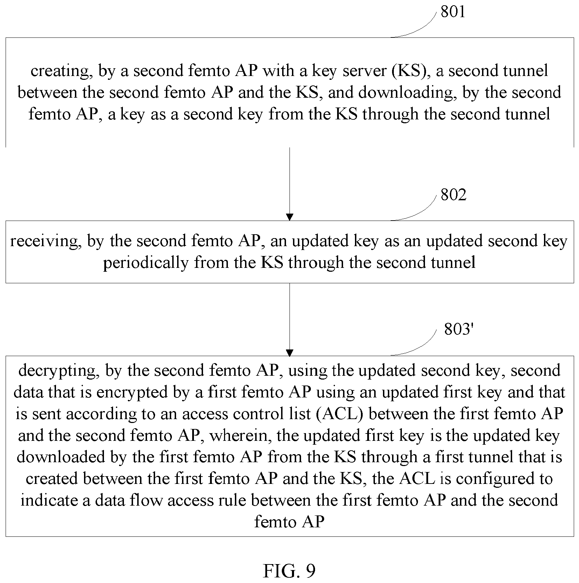

As shown in FIG. 9, in the present embodiment, after the creating, by a second femto AP, a second tunnel between the second femto AP and a key server (KS), and downloading a key as a second key from the KS through the second tunnel, the method further includes:
step 802, receiving, by the second femto AP, an updated key as an updated second key periodically from the KS through the second tunnel.
step 803', decrypting, by the second femto AP, using the updated second key, second data that is encrypted by a first femto AP using the updated first key and that is sent according to an access control list (ACL) between the first femto AP and the second femto AP, wherein, the updated first key is the updated key downloaded by the first femto AP from the KS through a first tunnel that is created between the first femto AP and the KS, the ACL is configured to indicate a data flow access rule between the first femto AP and the second femto AP.

For ease of description, the details of the method for communication between femto APs provided by the present embodiment, which could be referred to the method embodiments above, will not be described here.

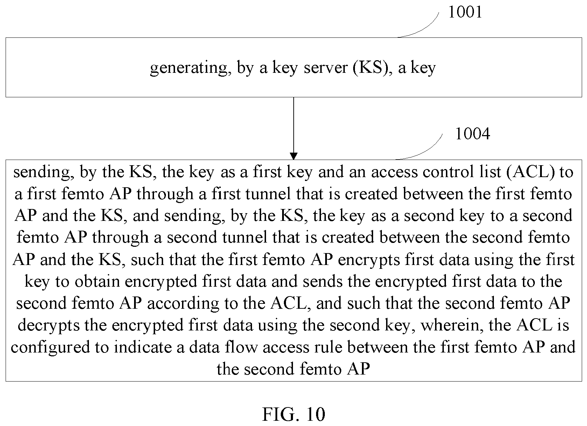

An embodiment of the present invention provides a method for communication between femto APs, as shown in FIG. 10, including:
step 1001, generating, by a key server (KS), a key;
step 1004, sending, by the KS, the key as a first key and an access control list (ACL) to a first femto AP through a first tunnel that is created between the first femto AP and the KS, and sending, by the KS, the key as a second key to a second femto AP through a second tunnel that is created between the second femto AP and the KS, such that the first femto AP encrypts first data using the first key to obtain encrypted first data and sends the encrypted first data to the second femto AP according to the ACL, and such that the second femto AP decrypts the encrypted first data using the second key, wherein, the ACL is configured to indicate a data flow access rule between the first femto AP and the second femto AP.

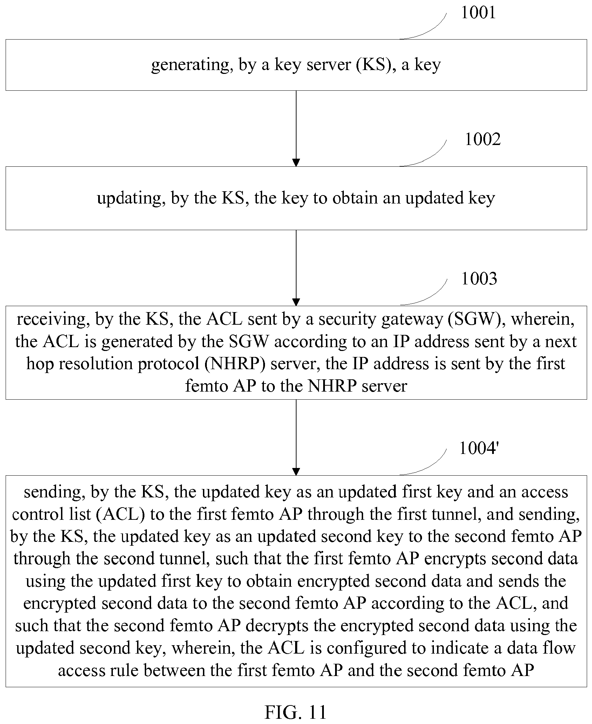

As shown in FIG. 11, in the present embodiment, before sending, by the KS, the key as the first key and an ACL to the first femto AP through the first tunnel that is created between the first femto AP and the KS, the method further includes:
step 1003, receiving, by the KS, the ACL sent by a security gateway (SGW), wherein, the ACL is generated by the SGW according to an IP address sent by a next hop resolution protocol (NHRP) server, the IP address is sent by the first femto AP to the NHRP server.

Wherein, the first tunnel is created by the first femto AP with the KS through internet key exchange (IKE) negotiation; and the second tunnel is created by the second femto AP with the KS through internet key exchange (IKE) negotiation.

Wherein, the first femto AP and the second femto AP belong to a same group domain of interpretation (GDOI) group.

Wherein, the sending, by the KS, the key as the first key and an ACL to a first femto AP through a first tunnel that is created between the first femto AP and the KS, and sending, by the KS, the key as the second key to a second femto AP through a second tunnel that is created between the second femto AP and the KS specifically includes:
sending, by the KS, the key as the first key and the ACL to the first femto AP through the first tunnel using a GDOI protocol, and sending, by the KS, the key as the second key to the second femto AP through the second tunnel using the GDOI protocol.

As shown in FIG.11, in the present embodiment, after generating, by the KS, a key, the method further includes:
step 1002, updating, by the KS, the key to obtain an updated key;
step 1004', sending, by the KS, the updated key as an updated first key and an access control list (ACL) to the first femto AP through the first tunnel, and sending, by the KS, the updated key as an updated second key to the second femto AP through the second tunnel, such that the first femto AP encrypts second data using the updated first key to obtain encrypted second data and sends the encrypted second data to the second femto AP according to the ACL, and such that the second femto AP decrypts the encrypted second data using the updated second key, wherein, the ACL is configured to indicate a data flow access rule between the first femto AP and the second femto AP.

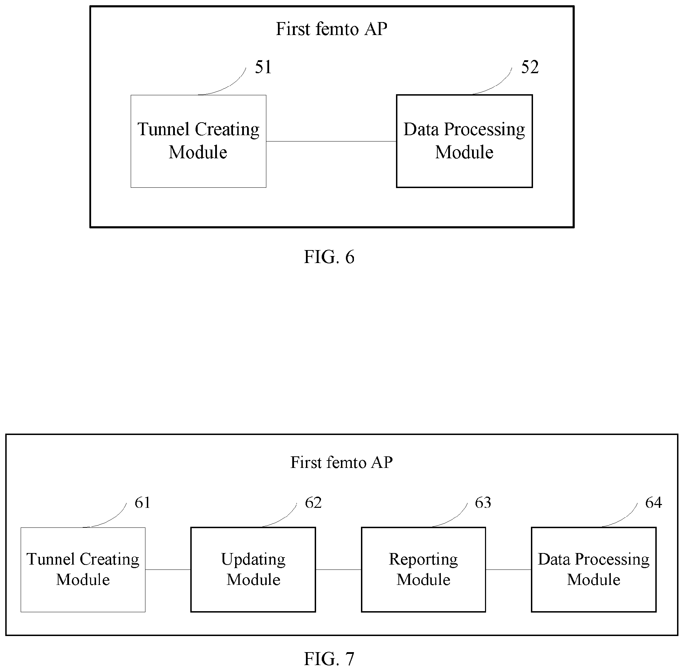

FIG. 6 is a schematic diagram of a femto AP according to an embodiment of the present invention, as shown in FIG. 6, the femto AP includes:
a tunnel creating module, configured to create a first tunnel between the first femto AP and a Key Server (KS), and download a key as a first key and an ACL from the KS through the first tunnel,
where the ACL is configured to indicate a data flow access rule between the first femto AP and a second femto AP;
a data processing module, configured to encrypt first data using the first key to obtain encrypted first data, and send the encrypted first data to the second femto AP according to the data flow access rule indicated by the ACL, such that the second femto AP decrypts the encrypted first data using a second key, where the second key is the key downloaded from the KS through a second tunnel that is created between the second femto AP and the KS.

Where, the tunnel creating module can be specifically configured to create the first tunnel between the first femto AP and the KS through Internet Key Exchange (IKE) negotiation.

FIG. 7 is a schematic diagram of a femto AP according to another embodiment of the present invention, as shown in FIG. 6, on the basis of the femto AP in FIG. 6, the femto AP further includes:
a reporting module, configured to report the IP address to a next hop resolution protocol (Next Hop Resolution Protocol, NHRP) server, such that the NHRP server sends the IP address to the S-GW such that the S-GW generates the ACL according to the IP address and sends the ACL to the KS. Where, the first femto AP and the second femto AP belong to a same Group Domain of Interpretation group;
the tunnel creating module can be specifically configured to download the key as the first key and the ACL from the KS through the first tunnel using GDOI protocol.

The first femto AP further includes:
an updating module, configured to receive an updated key as an updated first key from the KS through the first tunnel such that the data processing module encrypts second data using the updated first key.

The first femto AP according to the present embodiment is the executing subject by which the method for communication between femto APs according to embodiments of the present invention is performed, the detail can be referred to the above embodiments and will not be described here. The first femto AP according to an embodiment, through generating keys for the femto APs by setting the KS such that the femto APs can communicate with other femto APs using the keys, which avoids resource consuming and handover delay in the case of negotiation between two femto APs and generation of the key.

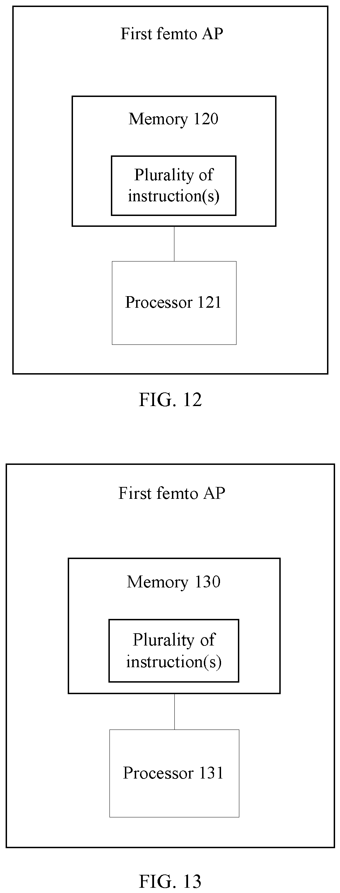

FIG. 12 is a schematic block diagram of a first femto AP according to an embodiment of the present invention, as shown in FIG. 12, the first femto AP includes:
a memory 120 that stores a plurality of instructions; and
a processor 121 coupled to the memory and configured to execute the instructions to:
   create a first tunnel between the first femto AP and a key server (KS), and download a key as a first key and an access control list (ACL) from the KS through the first tunnel, wherein the ACL is configured to indicate a data flow access rule between the first femto AP and a second femto AP; encrypt first data using the first key to obtain encrypted first data, and send the encrypted first data to the second femto AP according to the data flow access rule indicated by the ACL, so that the second femto AP decrypts the encrypted first data using a second key, wherein, the second key is the key downloaded by the second femto AP from the KS through a second tunnel that is created between the second femto AP and the KS.

Wherein, in the step of creating the first tunnel between the first femto AP and the key server (KS), the processor 121 is further configured to:
create the first tunnel between the first femto AP and the KS through internet key exchange (IKE) negotiation.

Wherein, the processor 121 is further configured to:
send an IP address to a next hop resolution protocol (NHRP) server, such that the NHRP server sends the IP address to a security gateway (SGW) such that the S-GW generates the ACL according to the IP address and sends the ACL to the KS.

Wherein, the first femto AP and the second femto AP belong to a same group domain of interpretation (GDOI) group.

Wherein, in the step of downloading the key as the first key and the ACL through the first tunnel, the processor 121 is further configured to:
download the key as the first key and the ACL from the KS through the first tunnel using a GDOI protocol.

Wherein, the processor 121 is further configured to:
receive an updated key as an updated first key periodically from the KS through the first tunnel; and
encrypt second data using the updated first key to obtain encrypted second data, and send the encrypted second data to the second femto AP according to the data flow access rule indicated by the ACL, so that the second femto AP decrypts the encrypted second data using an updated second key, wherein, the updated second key is the updated key downloaded by the second femto AP from the KS through the second tunnel that is created between the second femto AP and the KS.

FIG. 13 is a schematic block diagram of a second femto AP according to an embodiment of the present invention, as shown in FIG. 13, the second femto AP includes:
a memory 130 that stores a plurality of instructions; and
a processor 131 coupled to the memory and configured to execute the instructions to:
   create a second tunnel between the second femto AP and a key server (KS), and download a key as a second key from the KS through the second tunnel;
   decrypt, using the second key, first data that is encrypted by a first femto AP using a first key and that is sent according to an access control list (ACL) between the first femto AP and the second femto AP, wherein, the first key is the key downloaded by the first femto AP from the KS through a first tunnel that is created between the first femto AP and the KS, the ACL is configured to indicate a data flow access rule between the first femto AP and the second femto AP.

Wherein, in the step of creating the second tunnel between the second femto AP and the key server (KS), the processor 131 is further configured to:
create the second tunnel between the second femto AP and the KS through internet key exchange (IKE) negotiation.

Wherein, the second femto AP and the first femto AP belong to a same group domain of interpretation (GDOI) group.

Wherein, in the step of downloading the key as the second key from the KS through the second tunnel, the processor 131 is further configured to:
download the key as the second key from the KS through the second tunnel using a GDOI protocol.

Wherein, the processor 131 is further configured to:
receive an updated key as an updated second key periodically from the KS through the second tunnel;
decrypt, using the updated second key, second data that is encrypted by the first femto AP using an updated first key and that is sent according to the ACL between the first femto AP and the second femto AP, wherein, the updated first key is the updated key downloaded by the first femto AP from the KS through the first tunnel that is created between the first femto AP and the KS, the ACL is configured to indicate the data flow access rule between the first femto AP and the second femto AP.

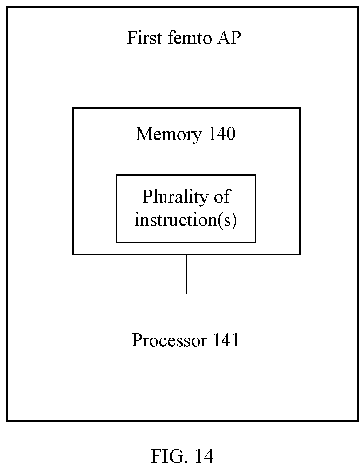

FIG. 14 is a schematic block diagram of a key server KS according to an embodiment of the present invention, as shown in FIG. 14, the KS includes:
a memory 140 that stores a plurality of instructions; and
a processor 141 coupled to the memory and configured to execute the instructions to:
   generate a key;
   send the key as a first key and an access control list (ACL) to a first femto AP through a first tunnel that is created between the first femto AP and the KS, and send the key as a second key to a second femto AP through a second tunnel that is created between the second femto AP and the KS, such that the first femto AP encrypts first data using the first key to obtain encrypted first data and sends the encrypted first data to the second femto AP according to the ACL, and such that the second femto AP decrypts the encrypted first data using the second key, wherein, the ACL is configured to indicate a data flow access rule between the first femto AP and the second femto AP.

Wherein, the processor 141 is further configured to:
receive the ACL sent by a security gateway (SGW), wherein, the ACL is generated by the SGW according to an IP address sent by a next hop resolution protocol (NHRP) server, the IP address is sent by the first femto AP to the NHRP server.

Wherein, the first tunnel is created by the first femto AP with the KS through internet key exchange (IKE) negotiation and the second tunnel is created by the second femto AP with the KS through internet key exchange (IKE) negotiation.

Wherein, the first femto AP and the second femto AP belong to a same group domain of interpretation (GDOI) group.

Wherein, in the step of sending the key as a first key and an ACL to a first femto AP through a first tunnel that is created between the first femto AP and the KS, and sending the key as a second key to a second femto AP through a second tunnel that is created between the second femto AP and the KS, the processor 141 is further configured to:
send the key as a first key and the ACL to the first femto AP through the first tunnel using a GDOI protocol, and send the key as a second key to the second femto AP through the second tunnel using the GDOI protocol.

Wherein, the processor 141 is further configured to:
update the key to obtain an updated key;
send the updated key as an updated first key to the first femto AP through the first tunnel, and send the updated key as an updated second key to the second femto AP through the second tunnel, such that the first femto AP encrypts second data using the updated first key to obtain encrypted second data and sends the encrypted second data to the second femto AP according to the ACL, and such that the second femto AP decrypts the encrypted second data using the updated second key, wherein, the ACL is configured to indicate a data flow access rule between the first femto AP and the second femto AP..

Persons skilled in the art will understand that: the implementation of all or part of the steps in the above-mentioned method embodiments can be completed by hardware related to program instructions. The program may be stored in a computer readable storage medium. During running, the program executes the steps of the above-mentioned method embodiments. The storage medium can be various media which are able to store program codes such as ROM, RAM, diskette or compact disc, etc.

Finally, it should be understood that the above embodiments are only used to explain, but not to limit the technical solution and protection scope of the present invention. In despite of the detailed description of the present invention with referring to the above embodiments, it should be understood that various modifications, changes or equivalent replacements can be made by those skilled in the art without departing from the scope of the present invention and covered in the claims of the present invention.

## Claims

1. A method for communication between femto access points, APs, comprising:
generating, by a key server, KS, a key;
creating, by a first femto AP with the KS, a first tunnel between the first femto AP and the KS, and downloading, by the first femto AP, the key as a first key and an access control list, ACL, from the KS through the first tunnel using a group domain of interpretation, GDOI, protocol, wherein the ACL is configured to indicate a data flow access rule between the first femto AP and a second femto AP, wherein the first key is a traffic encryption key, TEK, secured by a key encryption key, KEK;
creating, by a second femto AP with the KS, a second tunnel between the second femto AP and the KS, and downloading, by the second femto AP, the key as a second key from the KS through the second tunnel;
encrypting, by the first femto AP, first data using the first key to obtain encrypted first data, and sending the encrypted first data to the second femto AP according to the data flow access rule indicated by the ACL,
decrypting, by the second femto AP, the encrypted first data using the second key, wherein the first femto AP and the second femto AP belong to a same GDOI group.

2. The method as claimed in claim 1, wherein the creating, by the first femto AP, the first tunnel between the first femto AP and the key server, KS, comprises:
creating, by the first femto AP, the first tunnel between the first femto AP and the KS through internet key exchange, IKE, negotiation.

3. The method as claimed in claim 1, before the downloading, the first femto AP, the first key and the ACL from the KS through the first tunnel, the method further comprises:
sending, by the first femto AP, an IP address to a next hop resolution protocol, NHRP, server, such that the NHRP server sends the IP address to a security gateway, S-GW, such that the S-GW generates the ACL according to the IP address and sends the ACL to the KS.

4. The method as claimed in claim 1, wherein, before sending, by the KS, the key as the first key and an ACL to the first femto AP through the first tunnel that is created between the first femto AP and the KS, the method further comprises:
receiving, by the KS, the ACL sent by a security gateway, SGW, wherein, the ACL is generated by the SGW according to an IP address sent by a next hop resolution protocol, NHRP, server, the IP address is sent by the first femto AP to the NHRP server.

5. A system comprising a first femto AP, a second femto AP and a key server, KS, the first femto AP comprising:
a memory that stores a plurality of instructions; and
a processor coupled to the memory and configured to execute the instructions to: create a first tunnel with the KS, and download a key as a first key and an access control list, ACL, from the KS through the first tunnel using a group domain of interpretation, GDOI, protocol, wherein the ACL is configured to indicate a data flow access rule between the first femto AP and the second femto AP, wherein the first key is a traffic encryption key, TEK, secured by a key encryption key, KEK;
encrypt first data using the first key to obtain encrypted first data, and send the encrypted first data to the second femto AP according to the data flow access rule indicated by the ACL, , wherein the first femto AP and the second femto AP belong to a same GDOI group;
the KS comprising:
a memory that stores a plurality of instructions; and
a processor coupled to the memory and configured to execute the instructions to: generate the key;
send the key as the first key and the ACL to the first femto AP through the first tunnel using a GDOI protocol, and send the key as the second key to the second femto AP through a second tunnel;
the second femto AP comprising:
a memory that stores a plurality of instructions; and
a processor coupled to the memory and configured to execute the instructions to:
create the second tunnel between the second femto AP and the KS, and download the key as the second key from the KS through the second tunnel;
decrypt the encrypted first data using the second key, wherein the second key is the traffic encryption key, TEK, secured by the key encryption key, KEK.

6. The system as claimed in claim 5, wherein in the step of creating the first tunnel with the key server, KS, the processor is further configured to:
create the first tunnel with the KS through internet key exchange, IKE, negotiation.

7. The system as claimed in claim 5, wherein the processor of the first fempto AP is further configured to:
send an IP address to a next hop resolution protocol, NHRP, server, such that the NHRP server sends the IP address to a security gateway, SGW, such that the S-GW generates the ACL according to the IP address and sends the ACL to the KS.

8. The system as claimed in claim 5, wherein the processor of the KS is further configured to:
receive the ACL sent by a security gateway, SGW, wherein, the ACL is generated by the SGW according to an IP address sent by a next hop resolution protocol, NHRP, server, the IP address is sent by the first femto AP to the NHRP server.

## Patentansprüche

1. Verfahren zur Kommunikation zwischen Femto-Zugangspunkten, APs (access points), umfassend:
Erzeugen eines Schlüssels durch einen Schlüsselserver, KS (key server);
Erstellen, durch einen ersten Femto-AP mit dem KS, eines ersten Tunnels zwischen dem ersten Femto-AP und dem KS, und Herunterladen, durch den ersten Femto-AP, des Schlüssels als einen ersten Schlüssel und einer Zugriffssteuerungsliste, ACL (access control list), von dem KS durch den ersten Tunnel unter Verwendung eines GDOI(Group Domain of Interpretation)-Protokolls, wobei die ACL dazu konfiguriert ist, eine Datenflusszugriffsregel zwischen dem ersten Femto-AP und einem zweiten Femto-AP anzugeben, wobei der erste Schlüssel ein Verkehrsverschlüsselungsschlüssel, TEK (traffic encryption key), ist, der durch einen Schlüsselverschlüsselungsschlüssel, KEK (key encryption key), gesichert ist;
Erstellen, durch einen zweiten Femto-AP mit dem KS, eines zweiten Tunnels zwischen dem zweiten Femto-AP und dem KS und Herunterladen, durch den zweiten Femto-AP, des Schlüssels als einen zweiten Schlüssel von dem KS durch den zweiten Tunnel;
Verschlüsseln, durch den ersten Femto-AP, erster Daten unter Verwendung des ersten Schlüssels, um verschlüsselte erste Daten zu erhalten, und Senden der verschlüsselten ersten Daten an den zweiten Femto-AP gemäß der durch die ACL angegebenen Datenflusszugriffsregel,
Entschlüsseln, durch den zweiten Femto-AP, der verschlüsselten ersten Daten unter Verwendung des zweiten Schlüssels, wobei der erste Femto-AP und der zweite Femto-AP zu derselben GDOI-Gruppe gehören.

2. Verfahren nach Anspruch 1, wobei das Erstellen, durch den ersten Femto-AP, des ersten Tunnels zwischen dem ersten Femto-AP und dem Schlüsselserver, KS, Folgendes umfasst:
Erstellen, durch den ersten Femto-AP, des ersten Tunnels zwischen dem ersten Femto-AP und dem KS durch Verhandlung mittels Internet-Schlüsselaustausch, IKE (internet key exchange).

3. Verfahren nach Anspruch 1, wobei das Verfahren vor dem Herunterladen des ersten Femto-AP, des ersten Schlüssels und der ACL von dem KS durch den ersten Tunnel ferner Folgendes umfasst:
Senden, durch den ersten Femto-AP, einer IP-Adresse an einen Next-Hop-Resolution-Protocol(NHRP)-Server, sodass der NHRP-Server die IP-Adresse an ein Sicherheits-Gateway, S-GW, sendet, sodass das S-GW die ACL gemäß der IP-Adresse erzeugt und die ACL an den KS sendet.

4. Verfahren nach Anspruch 1, wobei das Verfahren vor dem Senden, durch den KS, des Schlüssels als den ersten Schlüssel und einer ACL an den ersten Femto-AP durch den ersten Tunnel, der zwischen dem ersten Femto-AP und dem KS erstellt ist, ferner Folgendes umfasst:
Empfangen, durch den KS, der ACL, die von einem Sicherheits-Gateway, SGW, gesendet wird, wobei die ACL durch das SGW gemäß einer IP-Adresse erzeugt wird, die von einem Next-Hop-Resolution-Protocol(NHRP)-Server gesendet wird, wobei die IP-Adresse von dem ersten Femto-AP an den NHRP-Server gesendet wird.

5. System, umfassend einen ersten Femto-AP, einen zweiten Femto-AP und einen Schlüsselserver, KS, wobei der erste Femto-AP Folgendes umfasst:
einen Speicher, der eine Vielzahl von Anweisungen speichert; und einen Prozessor, der mit dem Speicher gekoppelt und dazu konfiguriert ist, die Anweisungen zu Folgendem auszuführen:
Erstellen eines ersten Tunnels mit dem KS und Herunterladen eines Schlüssels als einen ersten Schlüssel und einer Zugriffssteuerungsliste, ACL, von dem KS durch den ersten Tunnel unter Verwendung eines GDOI (Group Domain of Interpretation)-Protokolls, wobei die ACL dazu konfiguriert ist, eine Datenflusszugriffsregel zwischen dem ersten Femto-AP und dem zweiten Femto-AP anzugeben, wobei der erste Schlüssel ein Verkehrsverschlüsselungsschlüssel, TEK (traffic encryption key), ist, der durch einen Schlüsselverschlüsselungsschlüssel, KEK (key encryption key), gesichert ist;
Verschlüsseln erster Daten unter Verwendung des ersten Schlüssels, um verschlüsselte erste Daten zu erhalten, und Senden der verschlüsselten ersten Daten an den zweiten Femto-AP gemäß der durch die ACL angegebenen Datenflusszugriffsregel, wobei der erste Femto-AP und der zweite Femto-AP zu einer gleichen GDOI-Gruppe gehören;
wobei der KS Folgendes umfasst:
einen Speicher, der eine Vielzahl von Anweisungen speichert; und
einen Prozessor, der mit dem Speicher gekoppelt und dazu konfiguriert ist, die Anweisungen zu Folgendem auszuführen:
Erzeugen des Schlüssels;
Senden des Schlüssels als den ersten Schlüssel und der ACL an den ersten Femto-AP durch den ersten Tunnel unter Verwendung eines GDOI-Protokolls und Senden des Schlüssels als den zweiten Schlüssel an den zweiten Femto-AP durch einen zweiten Tunnel;
wobei der zweite Femto-AP Folgendes umfasst:
einen Speicher, der eine Vielzahl von Anweisungen speichert; und
einen Prozessor, der mit dem Speicher gekoppelt und dazu konfiguriert ist, die Anweisungen zu Folgendem auszuführen:
Erstellen des zweiten Tunnels zwischen dem zweiten Femto-AP und dem KS und Herunterladen des Schlüssels als den zweiten Schlüssel von dem KS durch den zweiten Tunnel;
Entschlüsseln der verschlüsselten ersten Daten unter Verwendung des zweiten Schlüssels, wobei der zweite Schlüssel der Verkehrsverschlüsselungsschlüssel, TEK, ist, der durch den Schlüsselverschlüsselungsschlüssel, KEK, gesichert ist.

6. System nach Anspruch 5, wobei im Schritt des Erstellens des ersten Tunnels mit dem Schlüsselserver, KS, der Prozessor ferner zu Folgendem konfiguriert ist:
Erstellen des ersten Tunnels mit dem KS durch Verhandlung mittels Internet-Schlüsselaustausch, IKE.

7. System nach Anspruch 5, wobei der Prozessor des ersten Femto-AP ferner zu Folgendem konfiguriert ist:
Senden einer IP-Adresse an einen Next-Hop-Resolution-Protocol(NHRP)-Server, sodass der NHRP-Server die IP-Adresse an ein Sicherheits-Gateway, SGW, sendet, sodass das S-GW die ACL gemäß der IP-Adresse erzeugt und die ACL an den KS sendet.

8. System nach Anspruch 5, wobei der Prozessor des KS ferner zu Folgendem konfiguriert ist:
Empfangen der ACL, die von einem Sicherheits-Gateway, SGW, gesendet wird, wobei die ACL durch das SGW gemäß einer IP-Adresse erzeugt wird, die von einem Next-Hop-Resolution-Protocol(NHRP)-Server gesendet wird, wobei die IP-Adresse von dem ersten Femto-AP an den NHRP-Server gesendet wird.

## Revendications

1. Procédé de communication entre des points d'accès, AP, femto, comprenant :
la génération, par un serveur de clés, KS, d'une clé ;
la création, par un premier AP femto avec le KS, d'un premier tunnel entre le premier AP femto et le KS, et le téléchargement, par le premier AP femto, de la clé en tant que première clé et d'une liste de contrôle d'accès, ACL, du KS via le premier tunnel en utilisant un protocole de domaine d'interprétation de groupe, GDOI, dans lequel l'ACL est configurée pour indiquer une règle d'accès au flux de données entre le premier AP femto et un second AP femto, dans lequel la première clé est une clé de chiffrement de trafic, TEK, sécurisée par une clé de chiffrement de clés, KEK ;
la création, par un second AP femto avec le KS, d'un second tunnel entre le second AP femto et le KS, et le téléchargement, par le second AP femto, de la clé en tant que seconde clé du KS via le second tunnel ;
le chiffrement, par le premier AP femto, de premières données en utilisant la première clé pour obtenir des premières données chiffrées, et l'envoi des premières données chiffrées au second AP femto selon la règle d'accès au flux de données indiquée par l'ACL, le déchiffrement, par le second AP femto, des premières données chiffrées en utilisant la seconde clé, dans lequel le premier AP femto et le second AP femto appartiennent à un même groupe GDOI.

2. Procédé selon la revendication 1, dans lequel la création, par le premier AP femto, du premier tunnel entre le premier AP femto et le serveur de clés, KS, comprend :
la création, par le premier AP femto, du premier tunnel entre le premier AP femto et le KS par négociation d'échange de clé Internet, IKE.

3. Procédé selon la revendication 1, avant le téléchargement, par le premier AP femto, de la première clé et de l'ACL du KS via le premier tunnel, le procédé comprend en outre :
l'envoi, par le premier AP femto, d'une adresse IP à un serveur de protocole de résolution du prochain bond, NHRP, de sorte que le serveur NHRP envoie l'adresse IP à une passerelle de sécurité, S-GW, de sorte que la S-GW génère l'ACL selon l'adresse IP et envoie l'ACL au KS.

4. Procédé selon la revendication 1, dans lequel, avant l'envoi, par le KS, de la clé en tant que première clé et d'une ACL au premier AP femto via le premier tunnel créé entre le premier AP femto et le KS, le procédé comprend en outre :
la réception, par le KS, de l'ACL envoyée par une passerelle de sécurité, SGW, dans lequel, l'ACL est générée par la SGW selon une adresse IP envoyée par un serveur de protocole de résolution du prochain bond, NHRP, l'adresse IP est envoyée par le premier AP femto au serveur NHRP.

5. Système comprenant un premier AP femto, un second AP femto et un serveur de clés, KS, le premier AP femto comprenant :
une mémoire qui stocke une pluralité d'instructions ; et
un processeur couplé à la mémoire et configuré pour exécuter les instructions pour :
créer un premier tunnel avec le KS, et télécharger une clé en tant que première clé et une liste de contrôle d'accès, ACL, du KS via le premier tunnel en utilisant un protocole de domaine d'interprétation de groupe, GDOI, dans lequel l'ACL est configurée pour indiquer une règle d'accès au flux de données entre le premier AP femto et un second AP femto, dans lequel la première clé est une clé de chiffrement de trafic, TEK, sécurisée par une clé de chiffrement de clés, KEK ;
chiffrer des premières données en utilisant la première clé pour obtenir des premières données chiffrées, et envoyer les premières données chiffrées au second AP femto selon la règle d'accès au flux de données indiquée par l'ACL, dans lequel le premier AP femto et le second AP femto appartiennent à un même groupe GDOI ;
le KS comprenant :
une mémoire qui stocke une pluralité d'instructions ; et
un processeur couplé à la mémoire et configuré pour exécuter les instructions pour :
générer la clé ;
envoyer la clé en tant que première clé et l'ACL au premier AP femto via le premier tunnel en utilisant un protocole GDOI, et envoyer la clé en tant que seconde clé au second AP femto via un second tunnel ;
le second AP femto comprenant :
une mémoire qui stocke une pluralité d'instructions ; et
un processeur couplé à la mémoire et configuré pour exécuter les instructions pour :
créer le second tunnel entre le second AP femto et le KS, et télécharger la clé en tant que seconde clé du KS via le second tunnel ;
déchiffrer les premières données chiffrées en utilisant la seconde clé, dans lequel la seconde clé est la clé de chiffrement de trafic, TEK, sécurisée par la clé de chiffrement de clés, KEK.

6. Système selon la revendication 5, dans lequel à l'étape de création du premier tunnel avec le serveur de clés, KS, le processeur est en outre configuré pour :
créer le premier tunnel avec le KS par négociation d'échange de clé Internet, IKE.

7. Système selon la revendication 5, dans lequel le processeur du premier AP femto est en outre configuré pour :
envoyer une adresse IP à un serveur de protocole de résolution du prochain bond, NHRP, de sorte que le serveur NHRP envoie l'adresse IP à une passerelle de sécurité, SGW, de sorte que la S-GW génère l'ACL selon l'adresse IP et envoie l'ACL au KS.

8. Système selon la revendication 5, dans lequel le processeur du KS est en outre configuré pour :
recevoir l'ACL envoyée par une passerelle de sécurité, SGW, dans lequel l'ACL est générée par la SGW selon une adresse IP envoyée par un serveur de protocole de résolution du prochain bond, NHRP, l'adresse IP est envoyée par le premier AP femto au serveur NHRP.
